# EUROPÄISCHE PATENTSCHRIFT

(11) **EP 0 684 417 B1**
(45) Veröffentlichungstag und Bekanntmachung des Hinweises auf die Patenterteilung: **03.03.1999**
(21) Anmeldenummer: 95850081.1
(22) Anmeldetag: 25.04.1995
(51) Int. Cl.: F16K 17/08

(54) **Sicherheitsventil für Heisswasser-Heizungsanlagen**
Safety valve for hot water heating installation
Soupape de sécurité pour système de chauffage à eau chaude

(30) Priorität: 25.04.1994 SE 9401405
(43) Veröffentlichungstag der Anmeldung: 29.11.1995
(73) Patentinhaber: Ventim Ventil & Instrument AB, 391 27 Kalmar (SE)
(72) Erfinder: Föllmer, Bernhard, D-69488 Birkenau (DE); Schnettler, Armin, D-41517 Grevenbroich (DE); Costa, Karl, S-386 93 Färjestaden (SE)
(74) Vertreter: Säfwenberg, Björn

(56) Entgegenhaltungen:
- DE-A- 2 102 930
- DE-A- 2 748 187
- DE-C- 3 541 495
- DE-U- 8 702 152
- US-A- 4 243 070

## Beschreibung

Die vorliegene Erfindung betrifft ein Sicherheitsventil für Heißwasser-Heizungsanlagen gemäß dem Oberbegriff des Patentanspruches 1.

In geschlossenen Heißwasser-Heizungsanlagen kann ein unzulässiger Druckanstieg dadurch entstehen, daß durch die Nennwärmeleistung Q [kW] bei abgeschalteten Wärmeverbrauchern die Temperatur unzulässig steigt. Bei Erreichen der Siedetemperatur entsteht in den höchstgelegenen Teilen der Anlage ein Dampfpolster mit dem entsprechenden Siededruck.

Zur Vermeidung eines unzulässigen Druckanstieges muß das Sicherheitsventil diejenige Sattdampfmenge abführen, die der Nennwärmeleistung, bezogen auf die Verdampfungswärme, entspricht. Das Sicherheitsventil wird also entsprechend dieser Sattdampfmenge bemessen, die durch Verdampfung des Heißwassers, z.B. infolge Nichtabschaltung des Brenners entsteht.

Da das Sicherheitsventil im gesamten Wasserkreislauf tief angeordnet ist (in der Regel gerade auf dem Heizkessel), wird das Sicherheitsventil bei Vollöffnung statt der Dampfmenge sehr große Wassermengen abführen.

Wird es z.B. in einem Störfall erforderlich, nur eine Teildampfmenge der maximal erforderlichen Menge abzuführen, dann ist das schlagartige Vollöffnen des Sicherheitsventils mit dem Anblasen der sehr großen Wassermenge von großem Nachteil. Die Heißwasser-Heizungsanlage wird schnell trocken gefahren und verglüht.

Deshalb fordert das Schwedische Regelwerk, daß das Sicherheitsventil mit Wasser nicht schlagartig voll öffnet sondern zunächst in einem Teilhub proportional zum Druckanstieg. Dieser proportionale Anteil muß nach dem Schwedischen Regelwerk mindestens 5% sein.

Bekannt sind z.B. proportional-öffnende Sicherheitsventile, allerdings nur für flüssige Medien und auch nur mit reduzierter Leistung entsprechend α_{w}=0,36. Diese Ventile sind also nicht gleichzeitig in der Lage, eine Vollöffnung für gas-/dampfförmige Medien innerhalb einer Drucksteigerung von 10% über dem eingestellten Ansprechdruck zu erzielen.

Es besteht nämlich physikalisch die Schwierigkeit, eine Feder so "weich" auf die Strömungskraft der gas-/dampfförmigen Strömung anzupassen, daß das Ventil innerhalb der Drucksteigerung von 10% voll öffnet, und gleichzeitig muß die Feder so "hart" auf die Strömungskraft der Wasserströmung angepaßt sein, daß das Ventil mit Wasser proportional öffnet.

Hierbei ist zu bedenken, daß die Strömungskraft der Wasserströmung größer ist als die Strömungskraft der gas-/dampfförmigen Strömung. Der Grund liegt in dem Unterschied im spezifischen Gewicht.

Die vorliegende Erfindung hat zum Ziel, die Aufgabe zu lösen, ein Sicherheitsventil zu erstellen, das eine proportionale mit einer Voll- bzw. Hochhubcharakteristik kombiniert, und zwar dadurch daß es - zumindestens für flüssige Medien - von Beginn des Öffnens beim Öffnungsdruck und zu einem gewissen Teil vom Hub eine proportionale Charakteristik und danach bis zum vollen Hub eine Vollhubcharakteristik aufweist. Für gasförmige Medien genügt es wenn das Sicherheitsventil voll geöffnet ist bevor der Druckanstieg im System den eingestellten Öffnungsdruck mit mehr als 10% überschreitet.

Diese schwierige Aufgabe wird mit dem Sicherheitsventil gemäß der vorliegenden Erfindung erstmalig gelöst. Das wurde dadurch erreicht, daß dem Sicherheitsventil gemäß der Erfindung die im Patentanspruch 1 angegebene Kombination von Merkmalen erteilt wurde.

DE-A-2 600 756 beschreibt ein Sicherheitsventil für dampfförmiges Medium, insbesondere Wasserdampf, mit einem Ventilgehäuse mit einem Einlaß und einem Auslaß, einem zwischen Einlaß und Auslaß gelegenen Ventilsitz mit einer Dichtfläche und einem gegen und von dem Ventilsitz beweglichen Ventilkegel mit einer Dichtfläche, wobei der Ventilkegel gegen den Ventilsitz mit einer Federkraft, die dem Systemdruck entspricht, bei welchem das Sicherheitsventil öffnen soll, belastet ist, und wobei konzentrisch um den Ventilkegel eine mit dem Ventilkegel in die Öffnungsrichtung des Ventilkegels zusammenwirkende Hubglocke angeordnet ist, die eingerichtet ist, von einem beim Öffnen des Ventiles zwischen der Dichtfläche des Ventilsitzes und der Dichtfläche des Ventilkegels ausströmenden Medium getroffen zu werden und diesen Fluß in solche Richtung umzulenken, daß die Reaktionskraft zusammen mit dem Druck des ausströmenden Mediums gegen den Ventilkegel die Federkraft überwindet und Öffnung des Ventilkegels bewirkt. Dieses bekannte Sicherheitsventil, welches der Ausgangspunkt für die vorliegende Erindung ist, stellt ein Vollhubsicherheitsventil für Wasserdampf dar und erfüllt nicht die oben angeführten Anforderungen.

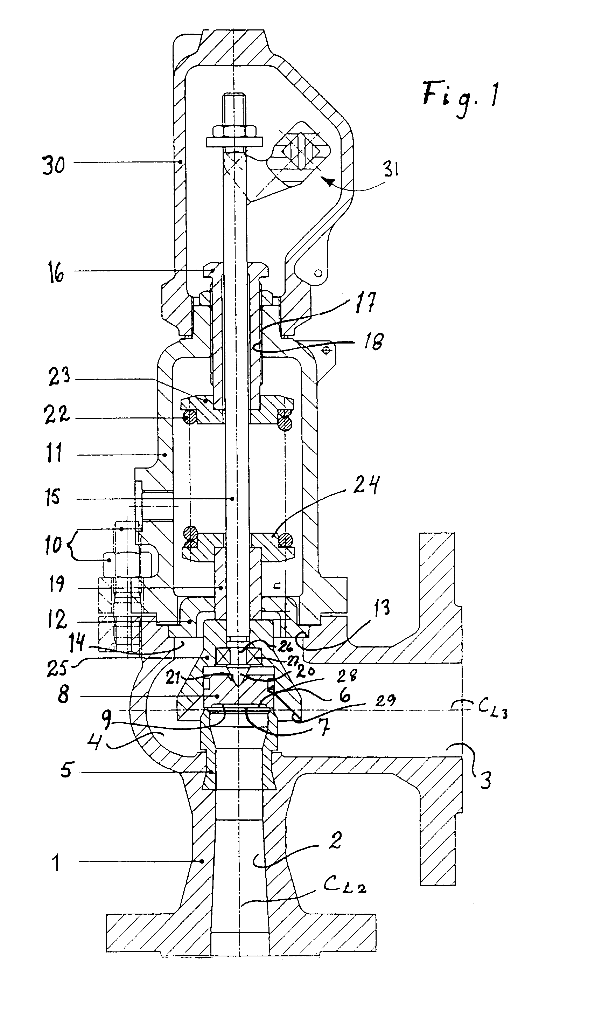

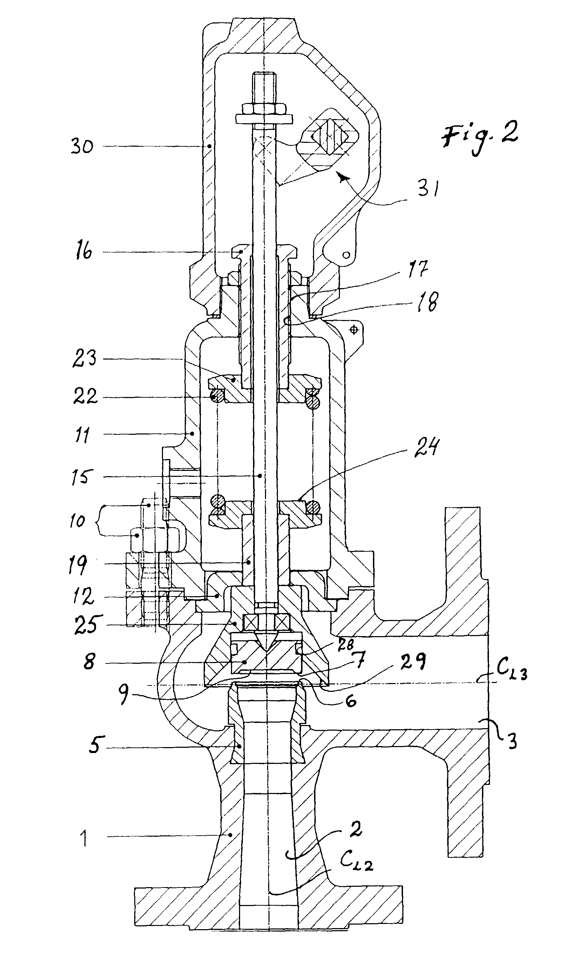

Die Erfindung wird nachfolgend, mit Hinweis auf die beigefügten Zeichnungen beschrieben, wobei Fig. 1 einen Schnitt durch das Sicherheitsventil im geschlossenen Zustand zeigt, Fig. 2 dasselbe im geöffneten Zustand zeigt und Fig. 3 eine Vergrößerung einer Partie des Sicherheitsventiles zeigt.

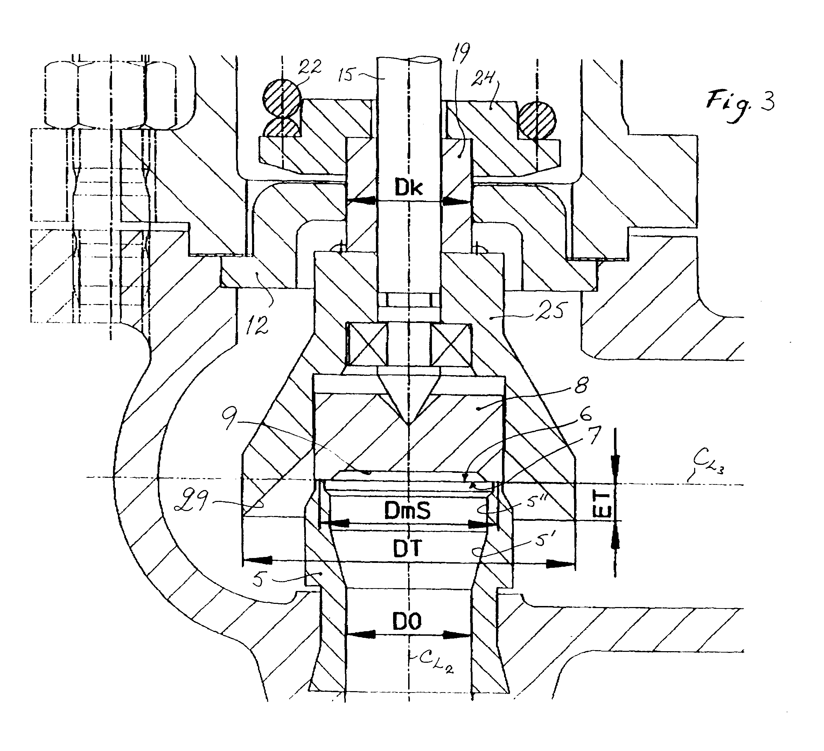

Das in der Zeichnung gezeigte Sicherheitsventil besteht aus einem Ventilgehäuse 1 mit einem Einlaß 2 und einem Auslaß 3, welche in einem Ventilkammer 4 zusammentreffen. Sowohl der Einlaß als auch der Auslaß haben einen zirkulären Querschnitt mit Mittellinien C_{L2} und C_{L3}, welche einander rechtwinklig in der Ventilkammer 4 kreuzen. In dem in der Ventilkammer 4 mündenden Ende des Einlaßes 2 ist eine Ventilsitzbuchse 5 fest angebracht, die einen rotationssymmetrischen Körper mit einem ringförmigen Querschnitt darstellt, dessen Achse mit der Mittellinie C_{L2} des Ventileinlaßes zusammenfällt. In ihrem in der Zeichnung oberen Ende schließt die Ventilsitzbuchse mit einer ebenen, ringförmigen Dichtfläche 6 ab. Der mittlere Durchmesser des Ventilsitzes wird mit DmS (Fig. 3) bezeichnet. Mit der Dichtfläche 6 wirkt eine ebenfalls ebene, ringförmige Dichtfläche 7 eines Ventilkegels 8 zusammen, der eine dem Einlaß 2 zugewandte und dem da herrschenden Systemdruck ausgesetzte Fläche 9 aufweist. Die Ebenen der Dichtflächen 6 und 7 sind rechtwinklig zur Mittellinie C_{L2} des Einlaßes.

Auf dem Ventilgehäuse 1 ist eine mit Schrauben und Muttern 10 befestigte Haube 11 aufgesetzt, die mit ihrem unteren Teil einen Deckel 12 gegen einen Ansatz 13 in der Öffnung 14 im Ventilgehäuse preßt. Durch den oberen Teil der Haube 11 läuft eine Ventilspindel 15, welche in einer Buchse 16 geführt wird. Diese ist mit einem Außengewinde 17 versehen, welches mit einem Innengewinde 18 im oberen Ende der Haube zusammenwirkt. Das untere Ende der Ventilspindel wird in einer Buchse 19 geführt, die wiederum in dem Deckel 12 gleitgeführt ist. Mit ihrem unteren, konischen Ende 20 am Ventilspindel in einer konischen Zentrierausnehmung 21 am Ventilkegel an.

Um die Ventilspindel 15 ist eine Spiralfeder 22 angeordnet, die zwischen einem oberen Stützteller 23 und einem unterem Stützteller 24, durch welche die Ventilspindel läuft, eingespannt ist. Der untere Stützteller 24 liegt gegen das obere Ende der Buchse 17 an, die mit ihrem unteren Ende auf der oberen Fläche einer Hubglocke 25 aufliegt, die ihrerseits durch die Vermittlung eines in einer Nut 26 in der Ventilspindel eingelegten Spannring 27 den Ventilkegel gegen den Ventilsitz drückt. Der obere Stützteller 23 liegt gegen das untere Ende der Buchse 16 an, die indem sie in das Gewinde 18 ein- oder ausgeschraubt werden kann, als Einstellschraube zur Vorspannung der Spiralfeder und damit zur Einstellung des Öffnungsdruckes am Sicherheitsventil dient.

Die Hubglocke 25 ist inwendig mindestens teilweise glockenartig geformt und weist eine zylindrische Aussparung 28 auf, in welcher ein Teil der zylindrischen Peripherie des Ventilkegels 8 aufgenommen ist. Die Ausnehmung 28 geht in eine konische Wandpartie 29 über, die bis zum unteren Rand der Hubglocke verläuft.

Auf der Haube 11 sitzt eine lösbare Haube 30, die eine Anordnung verbirgt, mit welcher die Ventilspindel von Hand zum Testen des Sicherheitsventiles angehoben werden kann.

Es versteht sich, daß das Medium, welches zwischen den parallelen Dichtflächen 6 und 7 ausströmt wenn der Ventilkegel 8 durch den Druck gegen die Fläche 9 vom Ventilsitz abhebt, als ein ringförmiger, radial nach außen gerichteter Strahl auf die konische Wandpartie 29 der Hubglocke auftrifft und von dieser in einen nach unten, im wesentlichen parallel mit der Achsenrichtung des Ventilkegels und der Ventilspindel gerichteten Strahl umgelenkt wird. Die Reaktionskraft dieser nach unten gerichteten Strahlen wirkt in der Öffnungsrichtung des Ventilkegels, d.h. gegen die Wirkung der Feder 22.

Das bis jetzt beschriebene Sicherheitsventil entspricht im wesentlichen einem schon bekannten, proportional arbeitenden Sicherheitsventil für Flüssigkeiten, das bei einem gegen den Ventilkegel anstehenden Druck im Einlaß 2, der den eingestellten höchsten erlaubten Systemdruck überschreitet, öffnet und den Einlaß mit dem Auslaß verbindet.

Damit der erstrebte Effekt erreicht werden soll, nämlich der Übergang von einer proportionalen auf eine Vollhubcharakteristik, weist das Sicherheitsventil gemäß der Erfindung jedoch neue wesentliche Merkmale auf.

Der Konuswinkel der komischen Wandpartie 29 der Hubglocke soll im Intervall von 80° bis 100° und vorzugsweise zwischen 88° und 92° liegen. Das beste Resultat wurde mit einen Konuswinkel von genau 90° erzielt, d. h. eine Schräge der Konusfläche zu den Dichtflächen 6 und 7 von exakt oder sehr nahe 45°, was der meist vorgetragene Wert ist.

Durch eine diffusorartige Erweiterung 5' im Ventileinlaß vom engsten Durchmesser Do (Referenz für die maximale Abblasmenge) auf den mittleren Sitzdurchmesser DmS mit einer deutlichen Flächenzunahme um den Faktor 1,5 bis 2 ist es möglich, die schwierige Anpassung von Federkraft und Strömungskraft von Wasser bzw. Dampf auf einen kleinen Hubbereich zu reduzieren, in welchem die Strömungskraft für Wasser und Dampf noch besser aneinander angepaßt werden können. Gleichzeitig kann die schon oben angeführte große Abblasemenge entsprechend einem üblichen "Hochhubventil" realisiert werden.

An die diffusorartige konische Erweiterung 5' schließt sich ein zylindrisches Teil 5'' an, so daß die Strömungsumlenkung im Ringspalt im Ventilsitz aus der axialen Anströmrichtung erfolgt.

Die Buchse 19 ist als "Auftriebskolben" ausgebildet. Durch die Gestaltung des Durchmessers DK des Auftriebskolbens im Verhältnis zum mittleren Sitzdurchmesser DmS zu 0,7 bis 0,9 ergibt sich eine geeignete Vergrößerung der Auftriebskraft bei gas-/dampfförmiger Durchströmung, weil die Haube [30] eine Entlastungsöffnung besitzt.

Um geeignete Strömungsverläufe über dem Ventilhub zu erzielen, wurde eine geeignete Innenkontur der Hubglocke entwickelt. Über was oben von ihrem vorgetragenen Öffnungswinkel von 90° gesagt wurde, ist folgendes charakteristisch:

Das Verhältnis zwischen dem äußeren Durchmesser DT der Hubglocke (Fig. 3) und dem mittleren Durchmesser DmS des Ventilsitzes soll bei 1,7 - 2,0 und das Verhältnis zwischen der Eintauchtiefe ET (Fig. 3) des Ventilsitzes in die Hubglocke 25 und dem mittleren Durchmesser [DmS] des Ventilsitzes 6 bei 0,2 - 0,4 liegen.

Vorteilhaft für die Ausbildung der Strömungskraft infolge Impulsumlenkung (Raketenprinzip) ist eine freie Abströmung von der Innenkontur der Hubglocke. Das wurde dadurch erreicht, daß der Ventilsitz so weit hochgezogen wurde, daß er nicht unter der Mittelinie C_{L3} im Auslaß liegt.

Das Sicherheitsventil gemäß der Erfindung ist das erste Ventil, das die gestellte Aufgabe löst und dabei einen proportionalen Anteil von sogar 10%-20% der maximalen Menge bei Vollhub verwirklicht.

Hierbei ist es wichtig zu bemerken, daß die bei dem Ventil gemäß der vorliegenden Erfindung maximale Abblasemengen mit
α_{w} = 0,7 für gas-/dampfförmige Medien
α_{w} = 0,5 für flüssige Medien
als groß zu bezeichnen sind und einem Vollhub-Sicherheitsventil zugeordnet werden können.

## Patentansprüche

1. Sicherheitsventil für gas- und dampfförmige sowie flüssige Medien, insbesondere für voll mit Wasser gefüllte Heißwasser-Heizungsanlagen, mit einem Ventilgehäuse (1) mit einem Einlaß (2) und einen Auslaß (3), einem zwischen Einlaß und Auslaß gelegenen Ventilsitz (5) mit einer Dichtfläche (6) und einem gegen und von dem Ventilsitz beweglichen Ventilkegel (8) mit einer Dichtfläche (7), wobei der Ventilkegel gegen den Ventilsitz mit einer Federkraft (22), die dem Systemdruck entspricht, bei welchem das Sicherheitsventil öffnen soll, belastet ist, und wobei konzentrisch um den Ventilkegel eine mit dem Ventilkegel in die Öffnungsrichtung des Ventilkegels (8) zusammenwirkende Hubglocke (25) angeordnet ist, die eingerichtet ist, von einem beim Öffnen des Ventiles zwischen der Dichtfläche (6) des Ventilsitzes und der Dichtfläche (7) des Ventilkegels ausströmenden Medium getroffen zu werden und diesen Fluß in solche Richtung umzulenken, daß die Reaktionskraft zusammen mit dem Druck des ausströmenden Mediums gegen den Ventilkegel die Federkraft überwindet und Öffnung des Ventilkegels bewirkt, **dadurch gekennzeichnet** daß der Einlaß (2) sich von einem kleinsten Durchmesser (Do) konisch (5') in einen zylindrischen Teil (5'') in der Richtung zur Dichtfläche (6) des Ventilsitzes (5) erweitert und daß eine gegen die Hubglocke mit ihrem einen Ende anliegende Hülse (19), deren anderes Ende dem Atmosphärendruck ausgesetzt ist, einen Außendurchmesser (DK) aufweist, dessen Verhältnis zum mittleren Durchmesser (DmS) des Ventilsitzes 0,7-0,9 beträgt.

2. Sicherheitsventil nach Anspruch 1, **dadurch gekennzeichnet** daß die Hubglocke innen eine Fläche mit der Form der Mantelfläche eines rechtwinkligen Konus mit dem Konuswinkel zwischen 80° und 100°, vorzugsweise 90° hat.

3. Sicherheitsventil nach Anspruch 2, **dadurch gekennzeichnet** daß der Querschnitt des Einlaßes sich vom kleinsten Durchmesser (Do) auf den mittleren Durchmesser (DmS) mit dem Faktor 1,5-2,0 vergrößert.

4. Sicherheitsventil nach einem der Ansprüche 1-3, **dadurch gekennzeichnet** daß der Ventilsitz (6) in Höhe oder oberhalb der Mittellinie (C_{L3}) des Auslaßes liegt.

5. Sicherheitsventil nach einem der Ansprüche 1-4, **dadurch gekennzeichnet** daß das Verhältnis zwischen dem äußeren Durchmesser (DT) der Hubglocke (25) und dem mittleren Durchmesser (DmS) des Ventilsitzes 1,7-2,0 beträgt.

6. Sicherheitsventil nach einem der Ansprüche 1-5, **dadurch gekennzeichnet** daß das Verhältnis zwischen der Eintauchtiefe (ET) des Ventilsitzes in der Hubglocke und dem mittleren Durchmesser (DmS) des Ventilsitzes 0,2-0,4 beträgt.

## Claims

1. A safety valve for gaseous and vaporised as well as fluid media, particularly for completely water filled hot water heating plants, with a valve housing (1) having an inlet (2) and an outlet (3), a valve seat (5) located between the inlet and the outlet and having a sealing surface (6) and a valve cone (8) moveable towards and from the valve seat and having a sealing surface (7), said valve cone being urged in a direction towards the valve seat by a spring force (22) corresponding to the system pressure at which the valve shall open, and a lifting bell (25) co-operating with the valve cone in the opening direction of the valve cone (8) being concentrically arranged around the valve cone, said lifting bell being adapted to be struck by a flow of medium escaping between the sealing surface (6) of the seat and the sealing surface (7) of valve when the valve cone is opened and to divert this flow in such a direction that the reaction force together with the pressure of the escaping medium against the valve cone overcomes the spring force and causes opening of the valve cone,
**characterized in** that the inlet (2) conically widens (5') in a direction towards the sealing surface (6) of the valve seat (5) from a smallest diameter (D0) to a cylindrical portion (5") and that a sleeve (19) having one end abutting the bell and another end exposed to atmospheric pressure has an outer diameter (Dk), whose relation to the mean diameter (DmS) of the seat is 0, 7 - 0,9.

2. A safety valve according to claim 1, **characterized in** that the lifting bell exhibits an interior surface having the shape of the mantle surface of a straight cone having a cone angle of between 80° and 100°, preferably 90°.

3. A safety valve according to claim 2, **characterized in** that the area of the inlet increases from its smallest diameter (D0) to the mean diameter (DmS) of the seat with a factor 1,5 - 2,0.

4. A safety valve according to any one of claims 1 - 3, **characterized in** that the valve seat (6) is located not below the centre line (C_{L3}) of the outlet opening.

5. A safety valve according to any one of claims 1 - 4, **characterized in** that the ratio between the diameter (DT) of the lifting bell (25) and the mean diameter (DmS) of the seat (6) is 1, 7 - 2,0.

6. A safety valve according to any one of claims 1 - 5, **characterized in** that the ratio between the penetration depth (ET) of the seat into the bell and the mean diameter (DmS) of the seat is 0,2 - 0,4.

## Revendications

1. Soupape de sécurité pour fluides à l'état de gaz, de vapeur et de liquides, en particulier pour installations de chauffage d'eau chaude entièrement remplies d'eau, comportant un boîtier (1) de soupape avec une entrée (2) et une sortie (3), un siège de soupape (5) situé entre l'entrée et la sortie et comportant une surface d'étanchéité (6), et un cône de soupape (8) comportant une surface d'étanchéité (7) et mobile en direction du siège de soupape et dans le sens inverse, le cône de soupape étant sollicité contre le siège de soupape par une force de ressort (22) qui correspond à la pression du système à laquelle la soupape de sécurité doit s'ouvrir, et une cloche de levage (25) coopérant avec le cône de soupape dans la direction d'ouverture du cône de soupape (8) étant agencée de manière concentrique autour du cône de soupape et prévue pour être atteinte par un fluide s'écoulant, lors de l'ouverture de la soupape, entre la surface d'étanchéité (6) du siège de soupape et la surface d'étanchéité (7) du cône de soupape et pour dévier ce flux dans une direction telle que la force de réaction, conjointement avec la pression du fluide en écoulement contre le cône de soupape, surmonte la force de ressort et entraîne l'ouverture du cône de soupape, **caractérisé en ce** que l'entrée (2) s'élargit coniquement (5') dans la direction de la surface d'étanchéité (6) du siège de soupape (5) depuis le plus petit diamètre (Do) jusqu'en une partie cylindrique (5") de l'entrée et en ce qu'une douille (19) en appui par une de ses extrémités contre la cloche de levage et dont l'autre extrémité est soumise à la pression atmosphérique, présente un diamètre extérieur (DK) dont le rapport avec le diamètre moyen (DmS) du siège de soupape est de 0,7 à 0,9.

2. Soupape de sécurité selon la revendication 1,
**caractérisé en ce** que la cloche de levage présente à l'intérieur une surface qui a la forme de la surface enveloppe d'un cône rectangulaire avec un angle de cône entre 80° et 100°, de préférence de 90°.

3. Soupape de sécurité selon la revendication 2,
**caractérisé en ce** que la section de l'entrée s'agrandit depuis le plus petit diamètre (Do) jusqu'au diamètre moyen (DmS) par le facteur 1,5 à 2,0.

4. Soupape de sécurité selon l'une quelconque des revendications 1 à 3, **caractérisé en ce** que le siège de soupape (6) est situé au niveau ou au-dessus de la ligne médiane (C_{L3}) de la sortie.

5. Soupape de sécurité selon l'une quelconque des revendications 1 à 4, **caractérisé en ce** que le rapport entre le diamètre extérieur (DT) de la cloche de levage (25) et le diamètre moyen (DmS) du siège de soupape est de 1,7 à 2,0.

6. Soupape de sécurité selon l'une quelconque des revendications 1 à 5, **caractérisé en ce** que le rapport entre la profondeur de plongement (ET) du siège de soupape dans la cloche de levage et le diamètre moyen (DmS) du siège de soupape est de 0,2 à 0,4.
